# FASCICULE DE BREVET EUROPEEN

(11) **EP 0 626 285 B1**
(45) Date de publication et mention de la délivrance du brevet: **22.01.1997**
(21) Numéro de dépôt: 94401044.6
(22) Date de dépôt: 10.05.1994
(51) Int. Cl.: B60J 10/00

(54) **Joint d'étanchéité pour carrosserie de véhicule automobile**
Dichtungprofilstreifen für Kraftfahrzeugkarrosserie
Sealing joint for motor vehicle body

(30) Priorité: 24.05.1993 FR 9306131
(43) Date de publication de la demande: 30.11.1994
(73) Titulaire: HUTCHINSON, F-75008 Paris (FR)
(72) Inventeur: Guillon, Henri, F-45700 Villemandeur (FR)
(74) Mandataire: Ramey, Daniel

(56) Documents cités:
- EP-A- 0 400 247
- GB-A- 2 036 840

## Description

L'invention concerne un joint d'étanchéité, en particulier pour carrosserie de véhicule automobile, réalisé en caoutchouc ou élastomère cellulaire et comportant une bande ou une couche de matière adhésive pour sa fixation sur un support.

Les joints en caoutchouc ou élastomère cellulaire sont actuellement très utilisés en construction automobile, en raison de leur grande souplesse, de leur capacité élevée de déformation élastique, de leur faible densité volumique, de leurs qualités d'isolation thermique et phonique, etc.

Leur fixation sur des supports ou sur des tôles de carrosserie, est réalisée commodément par collage grâce à des bandes ou des couches de matière adhésive prévues en général sur les joints, mais pose cependant beaucoup de problèmes, dûs essentiellement à l'élasticité des joints et des bandes adhésives oui s'étirent et s'allongent de façon plus ou moins importante au cours de leur pose en fonction de la tension à laquelle ils sont soumis. Il en résulte une dégradation de l'étanchéité que ces joints sont censés assurer.

Par le document GB-A-2036840, il est connu de prévoir un élément longitudinal sensiblement inextensible noyé dans une partie en caoutchouc compact d'un joint d'étanchéité pour véhicule automobile, cet élément inextensible ayant une faible largeur, de 5 mm par exemple et étant formé de fils de fibre de verre ou de matière synthétique tissés ou fixés sur un support. Cette réalisation connue, qui correspond au préambule de la revendication 1, a pour inconvénient un défaut d'adhérence entre le caoutchouc du joint et l'élément inextensible, de sorte que la traction exercée sur le joint lors de sa pose peut avoir pour effet de faire glisser le caoutchouc sur l'élément inextensible, au détriment de la qualité de l'étanchéité procurée par le joint.

L'invention a également pour but d'éviter ces inconvénients grâce à un joint d'étanchéité du type cellulaire qui est sensiblement inextensible.

Elle propose donc un joint d'étanchéité pour carrosserie de véhicule automobile, réalisé en caoutchouc ou élastomère et comportant une bande ou une couche de matière adhésive pour sa fixation sur un support, ainsi qu'une couche ou bande longitudinale en matière inextensible maillée, noyée dans le caoutchouc ou l'élastomère du joint, caractérisé en ce qu'il est réalisé en caoutchouc ou élastomère cellulaire et en ce que ladite couche ou bande est à mailles larges assurant une solidarisation avec la matière cellulaire du joint par passage de cette matière à travers les mailles précitées.

Dans un mode de réalisation préféré de l'invention, cette bande de matière non extensible est une bande de tissu ou de tresse textile à mailles larges, assurant une bonne solidarisation avec la matière cellulaire du joint.

Lorsqu'on utilise un tissu ou une tresse de fils ou de fibres de verre comme bande inextensible, il n'y a pas d'adhérence du caoutchouc ou de l'élastomère cellulaire sur cette bande et la solidarisation du joint et de la bande inextensible est réalisée par passage de la matière du joint à travers les mailles de la bande. Typiquement, la dimension des mailles est de un à quelques millimètres, ou davantage.

Le joint selon l'invention peut être fixé facilement sur un support ou sur une tôle de carrosserie dans la mesure il ne s'étire et ne s'allonge sensiblement pas lorsqu'il est soumis à une force de tension au cours de sa pose. De plus, la présence de la bande inextensible dans le joint ne modifie pas ses qualités propres de souplesse, de déformation élastique, de densité volumique, d'isolation thermique et phonique, etc.

En outre, cette bande de matière non extensible peut facilement être incorporée au joint lors de la fabrication de celui-ci sans augmentation sensible du coût.

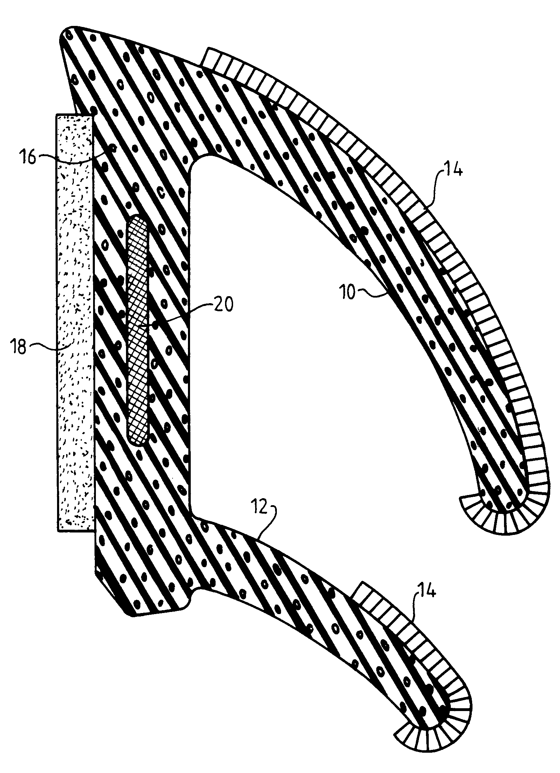

L'invention sera mieux comprise et d'autres caractéristiques, détails et avantages de celle-ci apparaitront plus clairement à la lecture de la description qui suit, fait à titre d'exemple en référence au dessin annexé, qui est une vue schématique agrandie, en coupe transversale, d'un joint selon l'invention.

Le joint qui a été représenté à titre d'exemple dans le dessin annexé est un joint "lécheur" destiné à être monté le long du bord inférieur d'une baie de véhicule automobile, pour assurer une étanchéité par appui de ses lèvres sur une vitre montée coulissante dans la baie.

Le joint représenté a en section transversale sensiblement la forme d'un U dont les jambes 10 et 12 sont sensiblement parallèles et orientées en oblique vers le bas du dessin, et comprennent sur leur face extérieure susceptible de venir en appui sur la vitre un revêtement 14 de matière du type velours ou "floc" à faible coefficient de frottement.

La partie 16 du joint comprise entre les jambes 10 et 12, comporte sur sa face extérieure une bande ou couche 18 d'une matière adhésive permettant de fixer le joint par collage sur un support approprié, qui peut être une tôle de carrosserie ou un cavalier de montage sur une tôle de carrosserie. La bande 18 de matière adhésive s'étend sur sensiblement toute la longueur du joint et sur la majeure partie de sa largeur.

Le joint est réalisé en caoutchouc ou élastomère cellulaire et présente donc une grande capacité d'allongement lorsqu'il est soumis à une force de tension, notamment lors de sa pose sur le support précité. La bande ou couche 18 de matière adhésive présente également une élasticité relativement élevée, et n'est donc pas susceptible de limiter l'allongement du joint lorsqu'il est mis sous tension.

L'invention prévoit donc une bande 20 de tissu ou de matière textile non extensible à mailles larges, qui s'étend sur toute la longueur du joint dans la partie 16 de celui-ci, parallèlement à la bande 18 de matière adhésive, la dimension des mailles étant suffisante pour le passage du caoutchouc ou de l'élastomère du joint.

Comme on le voit bien sur le dessin, cette bande 20 de matière non extensible est complètement noyée ou intégrée dans la matière de la partie 16 du joint, sensiblement au milieu de celle-ci et s'étend sur un tiers environ de la largeur du joint.

Pour assurer une liaison intime avec la matière du joint, la bande 20 est en matière tissée ou tressée à mailles relativement larges, par exemple de fils ou de fibres de verre ou de toute autre matière non extensible utilisable avec un caoutchouc ou un élastomère cellulaire.

La présence de la bande inextensible 20 dans la partie médiane 16 du joint comportant la bande 18 de matière adhésive, évite tout allongement du joint et de la bande adhésive lorsqu'ils sont mis en tension à l'occasion de la fixation du joint sur un support. Cette absence d'allongement du joint garantit une pose correcte et une qualité d'étanchéité.

Avantageusement, la bande 20 de matière non extensible est incorporée au joint au cours de la fabrication de ce dernier, cette fabrication ayant lieu de préférence par extrusion.

## Revendications

1. Joint d'étanchéité pour carrosserie de véhicule automobile, réalisé en caoutchouc ou élastomère et comportant une bande ou couche (18) de matière adhésive pour sa fixation sur un support, ainsi qu'une couche ou bande longitudinale (20) de matière inextensible maillée, noyée dans le caoutchouc ou l'élastomère du joint et empêchant sensiblement l'allongement du joint lors de sa fixation sur le support, caractérisé en ce qu'il est réalisé en caoutchouc ou élastomère cellulaire et en ce que ladite couche ou bande (20) de matière inextensible est à mailles larges assurant une solidarisation avec la matière cellulaire du joint par passage de cette matière à travers les mailles précitées.

2. Joint selon la revendication 1, caractérisé en ce que ladite couche ou bande (20) de matière non extensible s'étend parallèlement à la bande ou couche précitée (18) de matière adhésive.

3. Joint selon l'une des revendications précédentes, caractérisé en ce que ladite couche ou bande (20) de matière non extensible s'étend dans le sens de la longueur du joint, sensiblement au milieu de celui-ci.

4. Joint selon l'une des revendications précédentes, caractérisé en ce que ladite couche ou bande (20) de matière non extensible est une bande de matière textile tissée ou tressée.

5. Joint selon l'une des revendications précédentes, caractérisé en ce que la couche ou bande (20) de matière non extensible est incorporée au joint lors de la fabrication de celui-ci par extrusion.

6. Joint selon l'une des revendications précédentes, caractérisé en ce que la dimension des mailles de ladite couche ou bande (20) de matière non extensible est de un à quelques millimètres ou davantage.

## Claims

1. A sealing joint for a motor vehicle body, made of rubber or elastomer and comprising a strip or layer (18) of adhesive material for fixing it to a support as well as a longitudinal layer or strip (20) of non-extensible, meshed material which is embedded in the rubber or elastomer of the joint and substantially preventing elongation of the joint when it is fixed to the support, characterized in that it is made of cellular rubber or elastomer and in that said layer or strip (20) of non-extensible material is wide-meshed thus ensuring attachment with the joint cellular material by the material going through the above-mentioned mesh.

2. A joint according to Claim 1, characterized in that said layer or strip (20) of non-extensible material extends parallel to the above-mentioned strip or layer (18) of adhesive material.

3. A joint according to one of the preceding claims, characterized in that said layer or strip (20) of non-extensible material extends in the direction of the length of the joint, substantially in the centre of the latter.

4. A joint according to one of the preceding claims, characterized in that said layer or strip (20) of non-extensible material is a strip of woven or braided textile material.

5. A joint according to one of the preceding claims, characterized in that the layer or strip (20) of non-extensible material is incorporated into the joint when the latter is manufactured by extrusion.

6. A joint according to one of the preceding claims, characterized in that the size of the mesh of said layer or strip (20) of non-extensible material is between one and a few millimetres or more.

## Patentansprüche

1. Dichtung für eine Kraftfahrzeugkarosserie, die aus Kautschuk oder Elastomer hergestellt ist und ein Band bzw. einen Streifen oder eine Auflage bzw. Schicht (18) aus Klebstoff zu ihrer Befestigung auf einem Träger hat sowie eine Längsschicht oder einen Längsstreifen bzw. ein Längsband (20) aus nichtdehnbarem maschigem Material, die in dem Kautschuk oder Elastomer der Dichtung versenkt bzw. eingelassen ist und die Dehnung der Dichtung während ihrer Befestigung auf dem Träger im wesentlichen verhindert, dadurch **gekennzeichnet,** daß sie aus zellulärem Kautschuk oder Elastomer hergestellt ist und daß die Schicht oder der Streifen bzw. das Band (20) aus nichtdehnbarem Material mit breiten bzw. weiten Maschen ist, die eine Verbindung mit dem zellulären Material der Dichtung durch Durchgang dieses Materials durch die vorgenannten Maschen hindurch sicherstellen.

2. Dichtung gemäß Anspruch 1, dadurch **gekennzeichnet,** daß sich die Schicht oder der Streifen bzw. das Band (20) aus nichtdehnbarem Material parallel zu dem vorgenannten Streifen bzw. Band oder der vorgenannten Auflage bzw. Schicht (18) aus Klebstoff erstreckt.

3. Dichtung gemäß einem der vorhergehenden Ansprüche, dadurch **gekennzeichnet,** daß sich die Schicht oder das Band bzw. der Streifen (20) aus nichtdehnbarem Material in der Richtung der Länge der Dichtung, im wesentlichen in der Mitte derselben, erstreckt.

4. Dichtung gemäß einem der vorhergehenden Ansprüche, dadurch **gekennzeichnet,** daß die Schicht oder das Band bzw. der Streifen (20) aus nichtdehnbarem Material ein Band bzw. Streifen aus gewebtem oder geflochtenem Textilmaterial ist.

5. Dichtung gemäß einem der vorhergehenden Ansprüche, dadurch **gekennzeichnet,** daß die Schicht oder das Band bzw. der Streifen (20) aus nichtdehnbarem Material während der Herstellung der Dichtung durch Extrusion in dieselbe einverleibt ist.

6. Dichtung gemäß einem der vorhergehenden Ansprüche, dadurch **gekennzeichnet,** daß die Dimension der Maschen der Schicht oder des Bands bzw. Streifens (20) aus nichtdehnbarem Material von einem bis einigen Millimetern oder mehr ist.
